# EUROPÄISCHE PATENTSCHRIFT

(11) **EP 0 572 873 B1**
(45) Veröffentlichungstag und Bekanntmachung des Hinweises auf die Patenterteilung: **23.10.1996**
(21) Anmeldenummer: 93108249.9
(22) Anmeldetag: 21.05.1993
(51) Int. Cl.: F16B 7/04, E04B 2/76, E06B 3/96

(54) **Verbindungseinrichtung**
Connecting device
Dispositif de raccordement

(30) Priorität: 30.05.1992 DE 4217951
(43) Veröffentlichungstag der Anmeldung: 08.12.1993
(73) Patentinhaber: Hoffeins, Wolfgang, 70197 Stuttgart (DE)
(72) Erfinder: Hoffeins, Wolfgang, 70197 Stuttgart (DE)
(74) Vertreter: Jackisch-Kohl, Anna-Katharina

(56) Entgegenhaltungen:
- EP-A- 0 178 369
- CH-A- 480 589
- DE-A- 2 616 440
- DE-A- 2 649 523
- DE-U- 7 341 203

## Beschreibung

Die Erfindung betrifft eine Verbindungseinrichtung nach dem Oberbegriff des Anspruches 1.

Bei dieser bekannten Verbindungseinrichtung (DE-A1-26 49 523) ist das Druckteil als U-förmige Klammer ausgebildet, deren Schenkel mit ihren freien Stirnseiten in der Klemmlage gegen die Stütze gezogen werden. Innerhalb des Druckteiles ist das Zugteil verschiebbar untergebracht, das mit dem Betätigungsteil zur Befestigung der Verbindungseinrichtung an einer Stütze entsprechend verschoben werden kann. Da die für die Verspannung erforderlichen Bauteile der Verbindungseinrichtung frei zugänglich sind, besteht eine hohe Verschmutzungs- und/ oder Beschädigungsgefahr. Das Druckteil wird unmittelbar durch das Betätigungsteil in Form einer auf einer Kurbelwelle drehfest sitzenden Exzenterscheibe betätigt. Dadurch ist der Verschiebeweg des Zugteils verhältnismäßig gering, so daß eine ausreichende Klemmkraft unter Umständen nicht erzielt wird.

Es sind auch Verbindungseinrichtungen bekannt (DE-C2-38 12 179), bei denen der Haken des Zugteils den Rand der Durchstecköffnung des als Stütze ausgebildeten Befestigungsteiles hintergreift. Mittels des als Exzenter ausgebildeten Betätigungsteiles wird das Zugteil in ein Gehäuse zurückgeschoben, so daß der Rand der Durchstecköffnung der Stütze zwischen dem Haken des Zugteiles und dem Gehäuse verspannt wird. Die Durchstecköffnung ist wesentlich breiter als der Haken, so daß auch in verspanntem Zustand die Gefahr besteht, daß die Verbindungseinrichtung relativ zur Stütze so verschoben wird, daß der Haken in Höhe der Durchstecköffnung gelangt und dann bei unsachgemäßer Behandlung herausrutschen kann.

Der Erfindung liegt die Aufgabe zugrunde, die gattungsgemäße Verbindungseinrichtung so auszubilden, daß sie unter weitgehender Vermeidung einer Verschmutzungs-/Beschädigungsgefahr zuverlässig fest am Befestigungsteil verspannt werden kann.

Diese Aufgabe wird bei der gattungsgemäßen Verbindungseinrichtung erfindungsgemäß mit den kennzeichnenden Merkmalen des Anspruches 1 gelöst.

Bei der erfindungsgemäßen Verbindungseinrichtung sind das Druckteil und das Zugteil im Gehäuse sicher vor Verschmutzung und/oder Beschädigung geschützt. Dadurch ist auch nach langer Einsatzdauer eine sichere Verspannung der Verbindungseinrichtung am Befestigungsteil gewährleistet. Mit dem Steuerschieber kann das Druckteil zuverlässig im Gehäuse verschoben werden, um die Montage bzw. Demontage der Verbindungseinrichtung einfach zu ermöglichen.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: in Stirnansicht eine erfindungsgemäße Verbindungseinrichtung,
- Fig. 2: drei in unterschiedlichen Ebenen liegende Ansichten der Verbindungseinrichtung gemäß Fig. 1, bei der die Einzelteile ihre Grundstellung einnehmen,
- Fig. 3 bis 6: in Darstellungen entsprechend Fig. 2 die verschiedenen Stellungen der Einzelteile der erfindungsgemäßten Verbindungseinrichtung während des Verstellvorganges,
- Fig. 7: einen Schnitt und eine Ansicht längs der Linie VII-VII in Fig. 2,
- Fig. 8: einen Schnitt und eine Ansicht längs der Linie VIII-VIII in Fig. 2,
- Fig. 9: in schematischer Darstellung den Anschluß der erfindungsgemäßen Verbindungseinrichtung an einer vertikalen Stütze,
- Fig. 10: in schematischer Darstellung den Anschluß der erfindungsgemäßen Verbindungseinrichtung an einem horizontalen Bauteil,
- Fig. 11: in Längsansicht eine zweite Ausführungform einer erfindungsgemäßen Verbindungseinrichtung, deren Einzelteile die Grundstellung einnehmen,
- Fig. 12 und 13: in Darstellungen entsprechend Fig. 11 die unterschiedlichen Lagen der Einzelteile der erfindungsgemäßen Verbindungseinrichtung gemäß Fig. 11 beim Verstell- und Spannvorgang,
- Fig. 14: eine Stirnansicht der erfindungsgemäßen Verbindungseinrichtung gemäß Fig. 11.

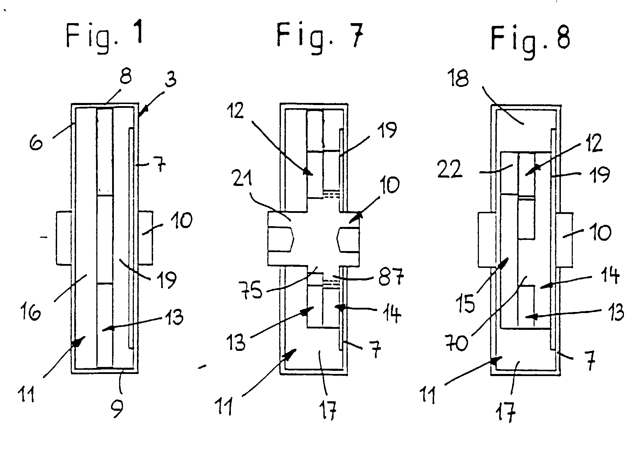

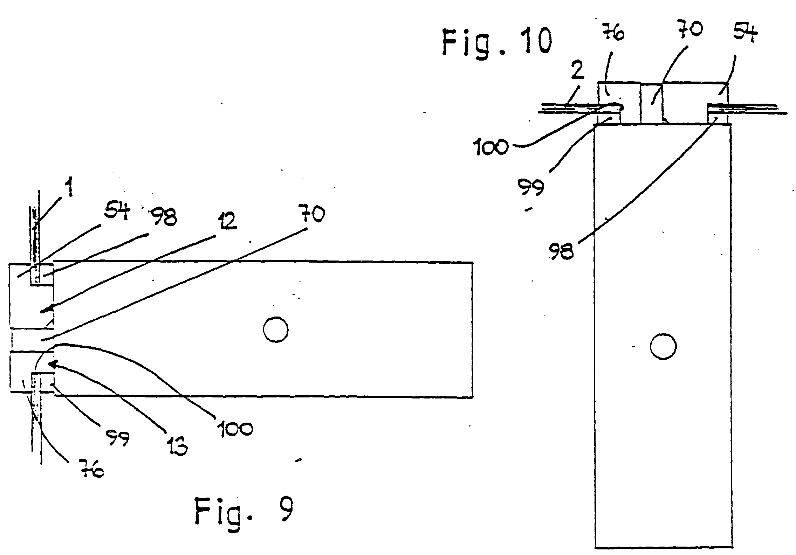

Die Verbindungseinrichtungen gemäß den Fig. 1 bis 14 können an horizontale, vertikale, aber auch an schräg angeordnete Bauteile angeschlossen werden. Die Figuren 9 und 10 zeigen beispielhaft, wie die Verbindungseinrichtung an eine vertikale Stütze 1 (Fig. 9) oder an ein horizontales Bauteil 2 oder dergleichen angeschlossen werden kann. Die Stütze 1 kann ein entsprechend gestaltetes Profilrohr, eine Profilstange oder dergleichen, aber auch eine Wand, ein Paneel, eine Schiene oder dergleichen sein. Das Bauteil 2 kann ebenfalls ein entsprechendes Profilrohr, eine Profilschiene oder dergleichen sein. Mit der verbindungseinrichtung können beispielsweise Träger, Stützen, Lampen und dergleichen an der Stütze 1 bzw. am Bauteil 2 lösbar befestigt werden.

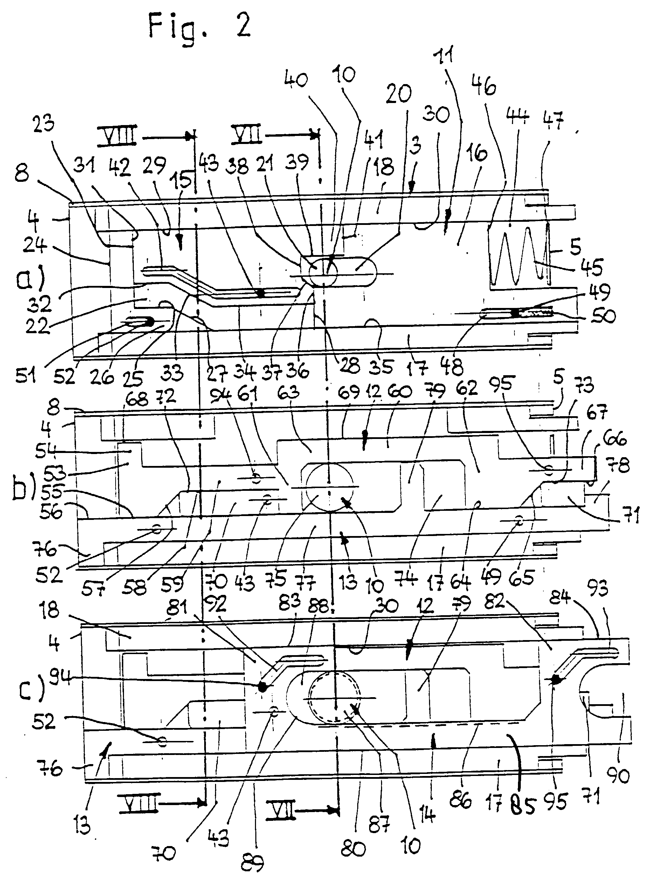

Die Verbindungseinrichtung gemäß den Fig. 1 bis 8 hat ein im Querschnitt rechteckiges Gehäuse 3, das an seinen Stirnseiten 4 und 5 (Fig. 2) offen ist. Das Gehäuse 3 hat zueinander parallele Seitenwände 6 und 7 (Fig. 1), die durch schmale Seitenwände 8 und 9 miteinander verbunden sind. Die Seitenwände 6 und 7 werden von einem Betätigungsteil 10 durchsetzt, mit dem in noch zu beschreibender Weise die im Gehäuse 3 untergebrachten Bauteile zur Befestigung an der Stütze 1 bzw. am Bauteil 2 verstellt werden können.

Im Gehäuse 3 sind ein Druckteil 11, zwei Zugteile 12 und 13, ein Steuerschieber 14 und ein Sperrschieber 15 untergebracht. Wie die Fig. 1, 7 und 8 zeigen, sind diese Bauteile im wesentlichen in drei nebeneinander liegenden Ebenen angeordnet. In den Fig. 2 bis 6 sind aus diesem Grunde der Übersichtlichkeit wegen diese drei Ebenen mit den entsprechenden Bauteilen zeichnerisch dargestellt worden.

Fig. 2 zeigt die Verbindungseinrichtung in ihrer Grundstellung, in der die beschriebenen Bauteile nicht über die offene Stirnseite 4 des Gehäuses 3 ragen. Das Druckteil 11 hat einen an der Innenseite der Gehäuseseitenwand 6 anliegenden Gleitteil 16, der sich über die gesamte Höhe der Seitenwand 6 zwischen den Seitenwänden 8 und 9 erstreckt (Fig. 1 und 2). Am oberen und unteren Längsrand erstreckt sich der Gleitteil 16 bis zur gegenüberliegenden Innenseite der Gehäusewand 7 (Fig. 2, 7 und 8). Hierzu ist der Gleitteil 16 mit entsprechenden Verbindungsstücken 17 und 18 versehen. Die Verbindungsstücke 17, 18, die an den Innenseiten der Gehäuseseitenwände 8 und 9 anliegen, verbinden den Gleitteil 16 mit einem weiteren Gleitteil 19 des Druckteiles 11. Der Gleitteil 19 liegt an der Innenseite der Gehäuseseitenwand 7 an (Fig. 1, 7 und 8).

Die beiden Gleitteile 16, 19 haben jeweils ein vorzugsweise in halber Höhe liegendes und in Längsrichtung des Gehäuses 3 sich erstreckendes Langloch. In Fig. 2a ist lediglich das Langloch 20 des Gleitteiles 16 dargestellt. Durch die Langlöcher 20 ragt das Betätigungsteil 10 mit einem im Querschnitt kreisförmigen Lagerteil 21. Die Breite des Langloches 20 entspricht vorteilhaft dem Durchmesser des Lagerteils 21. Die Länge dieses Langloches 20 begrenzt den Verschiebeweg des Druckteiles 11 im Gehäuse 3. In der Grundstellung gemäß Fig. 2 liegt das Druckteil 11 mit dem in Fig. 2 linken Rand des Langloches 20 am Lagerteil 21 an.

Wie Fig. 2a zeigt, ist der Gleitteil 16 mit einer Ausnehmung 22 versehen (Fig. 2a), in welcher der Sperrschieber 15 verschiebbar gelagert ist. Die Umrißform der Ausnehmung 22 ist annähernd an die Umrißform des Sperrschiebers 15 angepaßt. Wie Fig. 2a zeigt, liegt die Ausnehmung 22 nahe dem der Gehäusestirnseite 4 zugewandten Stirnseite des Gleitteils 16. Anstelle der Ausnehmung 22 kann der Gleitteil 16 auch nur eine entsprechende Vertiefung aufweisen, so daß der Sperrschieber 15 nicht an der Innenseite der Gehäusewand 6 anliegt. Wie Fig. 8 zeigt, ist im dargestellten Ausführungsbeispiel für den Sperrschieber 15 eine Vertiefung 22 vorgesehen, die bodenseitig durch einen in der Dicke verringerten Abschnitt des Gleitteiles 16 begrenzt ist. Die Vertiefung 22 hat einen senkrecht zur Gehäuselängsrichtung liegenden Rand 23 (Fig. 2a), der parallel zum stirnseitigen Rand 24 des Druckteils 11 sowie parallel zur Gehäusestirnseite 4 verläuft. Der Rand 23 erstreckt sich vom Verbindungsstück 18 aus senkrecht in Richtung auf das Verbindungsstück 17. Mit Abstand von ihm geht der Rand 23 rechtwinklig in die Oberseite 25 eines Anlagestückes 26 über, das auf dem Verbindungsstück 17 vorgesehen ist. Die Oberseite 25 erstreckt sich in Längsrichtung des Gehäuses 3 in Richtung auf die Gehäusestirnseite 5 und schließt stumpfwinklig an eine Schrägfläche 27 an, die sich bis zur Oberseite des Verbindungsstückes 17 erstreckt. Der Übergang der Schrägfläche 27 in die Oberseite des Verbindungsstückes 17 liegt etwa in halber Länge der Vertiefung 22. Etwa in Höhe des in Fig. 2a linken Endes des Langloches 20 wird die Vertiefung 22 durch einen parallel zum Rand 23 verlaufenden Rand 28 begrenzt, der sich bis zum Langloch 20 erstreckt.

Der Sperrschieber 15 ist als Stanzteil ausgebildet, dessen Dicke der Tiefe der Vertiefung 22 entspricht. Wie Fig. 2 zeigt, hat der Sperrschieber 15 einen ebenen Längsrand 29, mit dem er in der Ausgangslage an der Unterseite 30 des Verbindungsstücks 18 des Druckteiles 11 anliegt. Der Längsrand 29 geht an dem der Gehäusestirnseite 4 zugewandten Ende rechtwinklig in einen Rand 31 über, mit dem der Sperrschieber 15 am Rand 23 der Vertiefung 22 anliegt. Mit Abstand von der Oberseite 25 des Anlagestückes 26 geht der Rand 31 rechtwinklig in einen Auflagerand 32 über, der parallel zur Oberseite 25 des Anlagestückes 26 verläuft und gleich lang wie diese ist. Der Auflagerand 32 geht stumpfwinklig in eine Schrägfläche 33 über, die parallel zur Schrägfläche 27 des Anlagestückes 26 verläuft und gleich lang wie diese ist. Die Schrägfläche 33 schließt an eine ebene Anlagefläche 34 an, die parallel zur Oberseite 35 des Verbindungsstückes 17 verläuft. Die Anlagefläche 34 geht rechtwinklig in einen Führungsrand 36 über, mit dem der Sperrschieber 15 am Rand 28 der Vertiefung 22 anliegt. Der Führungsrand 36 verläuft parallel zum Rand 31 und ist verhältnismäßig kurz. Er schließt stumpfwinklig an eine Schrägfläche 37 an, die in Richtung auf den Rand 31 verläuft und stumpfwinklig an einen Bcden 38 anschließt, der parallel zu den Rändern 31 und 36 verläuft und gegenüber dem Führungsrand 36 zurückgesetzt ist. Der Bcden 38 geht rechtwinklig in eine Unterseite 39 einer Sperrnase 40 über, die in Richtung auf die Gehäusestirnseite 5 über den Führungsrand 36 ragt und in der Ausgangslage gemäß Fig. 2a den Lagerteil 21 des Betätigungsteiles 10 übergreift. Die Unterseite 39 verläuft parallel zur Anlagefläche 34 und ist über eine rechtwinklig zu ihr verlaufende Stirnseite 41 mit dem Längsrand 29 verbunden.

Mit geringem Abstand vom Auflagerand 32, der Schrägfläche 33 und der Anlagefläche 34 wird der Sperrschieber 15 von einer Kulissenführung 42 durchsetzt, die parallel zu den Flächen 32 bis 34 verläuft. Durch die Kulissenführung 42 ragt ein Stift 43 des Steuerschiebers 14. Der Stift 43 befindet sich in der Ausgangslage des Sperrschiebers 15 in dem benachbart und parallel zur Oberseite 35 des Verbindungsstückes 17 liegenden Teil der Kulissenführung 42.

Das Druckteil 11 mit den Gleitteilen 16, 19 und den Verbindungsstücken 17, 18 besteht vorteilhaft aus Kunststoff und ist vorteilhaft einstückig ausgebildet. Der Gleitteil 16 weist an seinem der Gehäusestirnseite 5 zugewandten Ende eine stirnseitig offene Ausnehmung 44 auf (Fig. 2a), in der eine Druckfeder 45 untergebracht ist. Sie stützt sich mit einem Ende an einem Boden 46 der Vertiefung 44 und mit ihrem anderen Ende an einem gehäuseseitigen Ansatz 47 ab.

Der Gleitteil 16 weist im Bereich zwischen der Vertiefung 44 und dem Verbindungsstück 17 ein Langloch 48 auf, das sich parallel zum Verbindungsstück 17 erstreckt und durch das ein Widerlager 49 des Zugteils 13 ragt. Am Widerlager 49 stützt sich eine Druckfeder 50 ab, die im Langloch 48 untergebracht ist und zwischen dem Widerlager 49 und dem benachbart zur Gehäusestirnseite 5 liegenden Ende des Langloches angeordnet ist.

Im Anlagestück 26 des Gleitteils 16 ist ein weiteres Langloch 51 vorgesehen, das ebenfalls parallel zum Verbindungsstück 17 verläuft, jedoch wesentlich kürzer ist als das Langloch 48. In das Langloch 51 greift ein Stift 52 ein, der senkrecht vom Zugteil 13 absteht. In der Ausgangslage gemäß Fig. 2 liegt der Stift 52 an dem der Gehäusestirnseite 5 zugewandten Ende des Langloches 51 an.

Auf dem Gleitteil 16 und teilweise auch auf dem Sperrschieber 15 sind die beiden Zugteile 12 und 13 verschiebbar gelagert. Die beiden Zugteile sind vorteilhaft jeweils als Stanzteile ausgebildet, so daß sie einfach gefertigt werden können.

Das Zugteil 12 hat an seinem der Gehäusestirnseite 4 zugewandten Ende einen Hakenkörper 53, dessen Hakenschenkel 54 in Richtung auf die Gehäusewand 8 gerichtet ist. Der Hakenschenkel 54 endet mit Abstand von der Gehäusewand 8 (Fig. 2b). Der Hakenkörper 53 liegt in der Ausgangslage gemäß Fig. 2 mit einer ebenen Unterseite 55 auf der ebenen Oberseite 56 des Zugteiles 13 auf. Im Bereich der Unterseite 55 ist der Hakenkörper 53 wesentlich breiter als im Bereich des Hakenschenkel 54, so daß das Zugteil 12 hohe Kräfte aufnehmen kann. Da das Zugteil 12 verhältnismäßig dünn ausgebildet ist und die im Einsatz der Verbindungseinrichtung auftretenden Kräfte In der Ebene des Zugteiles 12 wirken, hat es infolge des breiten Hakenkörpers 53 ein hohes Widerstandsmoment.

Die Unterseite 55 des Hakenkörpers 53 geht über eine Schrägfläche 57, die in Richtung auf die Gehäusewand 8 verläuft, in eine ebene Auflagefläche 58 eines schmalen Steges 59 über. Der Steg 59, der parallel zum Verbindungsstück 17 des Druckteiles 11 verläuft, verbindet den Hakenkörper 53 mit einem U-förmigen Zwischenstück 60, dessen Schenkel 61 und 62 in der Ausgangslage gemäß Fig. 2 auf der ebenen Oberseite 56 des Zugteils 13 aufliegen (Fig. 2b). Der Quersteg 63 des Zwischenstückes 60 verläuft parallel zum Steg 59, hat jedoch geringeren Abstand vom Verbindungsstück 18 des Druckteiles 11 als der Steg 59. Der der Gehäusestirnseite 5 zugewandte Schenkel 62 ist verbreitert ausgebildet. Die Auflagefläche 64 des Schenkels 62 geht über eine Schrägfläche 65 in die Unterseite 66 eines Ansatzes 67 über, der fluchtend zum Steg 59 verläuft und gleiche Höhe wie dieser hat.

Die Stirnseite 68 des Hakenschenkels 54 sowie die der Gehäusewand 8 zugewandte Stirnseite 69 des Quersteges 63 des Zwischenstückes 60 liegen in einer gemeinsamen Ebene. Außerdem haben diese Stirnseiten 68, 69 geringen Abstand von der Unterseite 30 des Verbindungsstückes 18 des Druckteiles 11.

Die beiden parallel zueinander verlaufenden Schrägflächen 57 und 65 des Zugteils 12 bilden Steuerflächen, über welche das Zugteil 12 in noch zu beschreibender Weise mittels zweier Steuerteile 70 und 71 des Steuerschiebers 14 in seine Sperrlage verschoben wird. In der Ausgangslage gemäß Fig. 2b liegen der Steg 59 und der Ansatz 67 des Zugteiles 12 mit ihren ebenen Auflageflächen 58 und 66 auf der ebenen Oberseite 72, 73 der Steuerteile 70, 71 auf, die ihrerseits auf der Oberseite 56 des Druckteiles 11 aufliegen. Der Steuerteil 70 erstreckt sich vom Schenkel 61 des Zwischenstückes 60 bis in Höhe des Überganges der Schrägfläche 57 in die Auflagefläche 58. Der andere Steuerteil 71, der wesentlich kürzer als der Steuerteil 70 ist, erstreckt sich vom Übergang der Schrägfläche 65 in die Unterseite 66 des Ansatzes 67 in Richtung auf das freie Ende des Ansatzes 67.

Die Steuerteile 70, 71 sind vorteilhaft einstückig mit dem Steuerschieber 14 ausgebildet. Wie sich aus Fig. 8 ergibt, haben die Steuerteile 70, 71 gleiche Dicke wie die beiden Zugteile 12 und 13.

Durch den vom Zwischenstück 60 umschlossenen Raum 74 ragt ein Exzenterteil 75 des Betätigungsteiles 10. Der Abstand des Quersteges 63 des Zwischenstückes 60 vom Zugteil 13 entspricht dem Außendurchmesser des Exzenterteils 75 (Fig. 2b).

In der Ausgangslage liegt der Hakenkörper 53 des Zugteils 12 innerhalb des Gehäuses 3, während der Ansatz 67 ebenso wie der Gleitteil 16 über die gegenüberliegende Gehäusestirnseite 5 ragt.

Das Zugteil 13 ist ebenfalls vorzugsweise ein Stanzteil, das eine einfache und kostengünstige Fertigung erlaubt. Die beiden Zugteile 12 und 13 liegen, wie die Fig. 1, 7 und 8 zeigen, in einer gemeinsamen Ebene und sind gleich dick. Beide Zugteile liegen mit ihren Breitseiten über einen Teil ihrer Länge am Gleitteil 16 sowie am Steuerschieber 14 an. Das Zugteil 13 weist an seinem der Gehäusestirnseite 4 zugewandten Ende einen Haken 76 auf, der entgegengesetzt zum Haken 54 des Zugteils 12 gerichtet ist. In der Ausgangsstellung gemäß Fig. 2b liegt die Stirnseite des Hakens 76 bündig mit der Gehäusestirnseite 4. Das Zugteil 13 ist im übrigen im wesentlichen stegförmig ausgebildet und erstreckt sich mit einem Stegkörper 77 über das gegenüberliegende Ende des Gehäuses 3 hinaus. Der Stegkörper 77 liegt auf der Oberseite 35 des Verbindungsstückes 17 des Druckteiles 11 auf. An dem dem Haken 76 gegenüberliegenden Ende weist der Stegkörper 77 einen entgegengesetzt zum Haken 76 gerichteten Ansatz 78 auf, der einen Endanschlag für den Steuerteil 71 des Steuerschiebers 14 bildet. Wie Fig. 2b zeigt, liegt der Steuerteil 71 in Ausgangsstellung an diesem Ansatz 78 an.

Vom Stegkörper 77 steht im Bereich zwischen seinen beiden Enden ein Mitnehmer 79 senkrecht ab, der in den Aufnahmeraum 74 des Zugteils 12 eingreift und sich in der Ausgangslage gemäß Fig. 2b bis zum Quersteg 63 des Zwischenstückes 60 erstreckt. In der Ausgangslage liegt der Mitnehmer 79, der vorteilhaft einstückig mit dem Zugteil 13 ausgebildet ist, im Bereich zwischen dem Exzenterteil 75 und dem Schenkel 62 des Zugteils 12. Vom Stegkörper 77 stehen das Widerlager 49 sowie der Stift 52 senkrecht ab.

Der Steuerschieber 14 hat im wesentlichen U-förmigen Grundriß (Fig. 2c). Er liegt mit einem über seine gesamte Länge durchgehenden ebenen Rand 80 auf der Oberseite 35 des Verbindungsstückes 17 des Druckteiles 11 auf. Die beiden Schenkel 81 und 82 des Steuerschiebers 14 erstrecken sich bis zum gegenüberliegenden Verbindungsstück 18, an dessen Unterseite 30 sie mit ihren ebenen Stirnseiten 83 und 84 anliegen. Der die beiden Schenkel 81, 82 verbindende Quersteg 85 des Steuerschiebers 14 weist auf seiner dem Verbindungsstück 18 zugewandten Seite eine Verzahnung 86 auf, in die ein Zahnrad 87 des Betätigungsteiles 10 eingreift.

Der Schenkel 81 ist auf seiner dem Schenkel 82 zugewandten Innenseite mit einer teilkreisförmigen Vertiefung 88 versehen, in die das Zahnrad 87 in der Ausgangsstellung teilweise eingreift. Der Krümmungsradius des Bodens 89 der Vertiefung 88 entspricht vorteilhaft dem Radius des Zahnrades 87.

Der Schenkel 82 weist auf seiner vom Schenkel 81 abgewandten Außenseite ebenfalls eine Vertiefung 90 auf, deren Boden 91 vorteilhaft den gleichen Krümmungsradius hat wie der Boden 89 der Vertiefung 88.

In beiden Schenkeln 81, 82 des Steuerschiebers 14 ist jeweils eine Kulissenführung 92 und 93 vorgesehen, die gleich ausgebildet sind und jeweils V-Form haben. Beide Kulissenführungen 92, 93 haben jeweils einen parallel zu den Stirnseiten 83, 84 der Schenkel 81, 82 verlaufenden Führungsabschnitt, der an dem der Gehäusestirnseite 4 zugewandten Ende in einen schräg gegen das Verbindungsstück 17 des Druckteiles 11 gerichteten Führungsabschnitt übergeht. In die Kulissenführungen 92, 93 greifen Stifte 94 und 95 ein, die senkrecht vcm Steg 59 und vom Ansatz 67 des Zugteils 12 abstehen. In der Ausgangslage liegen die Stifte 94, 95 an dem der Gehäusestirnseite 4 zugewandten Ende der Kulissenführung 92, 93 an.

Vom Schenkel 81 des Steuerschiebers 14 steht der Stift 43 ab, der den Steuerteil 70 durchsetzt und in die Kulissenführung 42 des Sperrschiebers 15 eingreift.

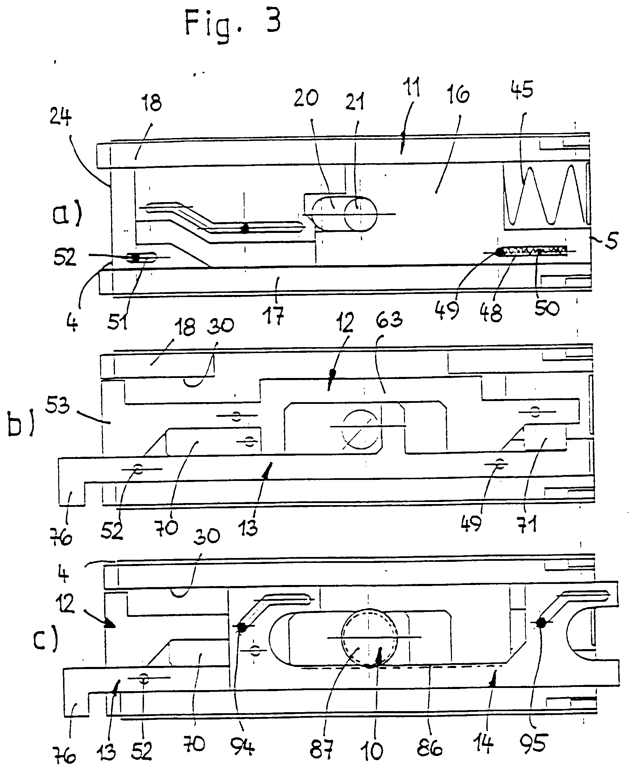

Im Einsatz wird die Verbindungseinrichtung mit der Stirnseite 4 an die jeweilige Stütze angelegt. Das Betätigungsteil 10, das über beide Gehäuseseitenwände 6 und 7 ragt (Fig. 1), kann mit einem geeigneten Werkzeug um seine Achse gedreht werden. In den Gehäuseseitenwänden 6, 7 ist hierzu das Betätigungsteil 10 mit entsprechenden Zapfen drehbar gelagert. Wie Fig. 7 zeigt, kann das Betätigungsteil 10 an beiden Enden jeweils eine Aufnahme für einen Inbusschlüssel aufweisen. Wird das Betätigungsteil 10 in der Darstellung gemäß Fig. 2 im Uhrzeigersinn um seine Achse gedreht, wird infolge des Eingriffes des Zahnrades 87 in die Verzahnung 86 der Steuerschieber 14 in Richtung auf die Gehäusestirnseite 4 verschoben (Fig. 3c). Über die Stifte 94 und 95 wird das Zugteil 12 entsprechend mitgenommen. Da es mit seinem Quersteg 63 an der Unterseite 30 des Verbindungsstückes 18 des Druckteiles anliegt, können die Stifte 94, 95 in den Kulissenführungen 32, 33 nicht verschoben werden. Über die Steuerteile 70 und 71 des Steuerschiebers 14 wird auch das Zugteil 13 mitgenommen (Fig. 3b und 3c). Der Haken 76 des Zugteils 13 liegt dann mit Abstand vor der Gehäusestirnseite 4. Der Hakenkörper 53 des Zugteiles 12 ragt in dieser ersten Verstellphase nur wenig über die Gehäusestirnseite 4.

Da das Widerlager 49 und der Stift 52 des Zugteils 13 in die Langlöcher 48 und 51 des Gleitteils 16 des Druckteiles 11 ragen, stoßen sie nach kurzem Verschiebeweg an die der Gehäusestirnseite 4 zugewandten Enden der Langlöcher 48, 51. Beim weiteren Verschieben des Zugteils 13 wird dann das Druckstück 11 mitgenommen. Hierbei wird das Druckteil 11 so weit verschoben (Fig. 3a), daß sein Rand 24 bündig mit der Gehäusestirnseite 4 liegt. In dieser Lage ragen die Verbindungsstücke 17 und 18 des Druckteiles 11 über die Gehäusestirnseite 4, während das Druckteil 11 mit seinem gegenüberliegenden Ende vorteilhaft bündig mit der Gehäusestirnseite 5 liegt. Beim Verschieben des Druckteiles 11 werden die Federn 45 und 50 geringfügig entspannt.

Der maximale Verschiebeweg des Druckteiles 11 ist dadurch begrenzt, daß es mit dem der Gehäusestirnseite 5 zugewandten Rand des Langloches 20 am Lagerteil 21 des Betätigungsteiles 10 zur Anlage kommt (Fig. 3a). Da das Druckteil 11 auf diese Weise gegen weiteres Verschieben gesichert ist, ist auch das Zugteil 13 gegen weiteres Verschieben blockiert, da der Stift 52 und das Widerlager 49 in der beschriebenen Weise an den entsprechenden Enden der Langlöcher 48 und 50 anliegen.

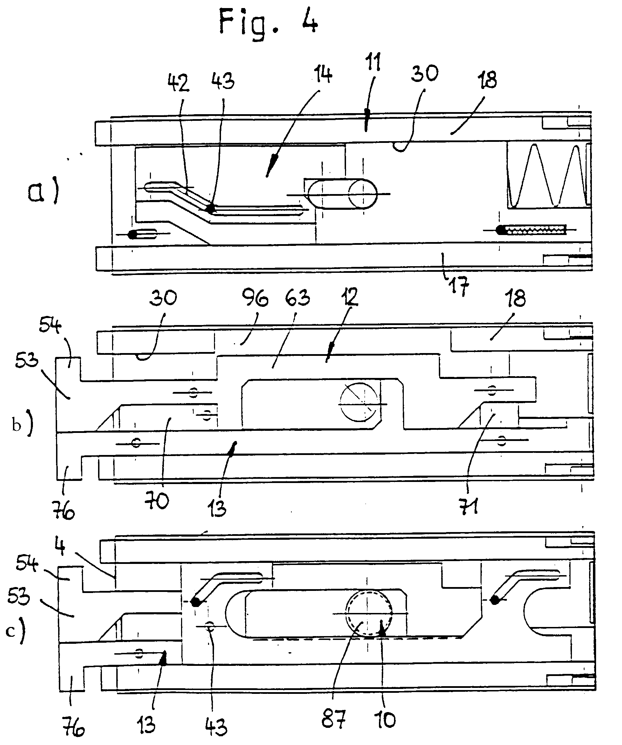

Wird darum das Betätigungsteil 10 weiter im Uhrzeigersinn gedreht, bleibt das Zugteil 13 stehen, während über das Zahnrad 87 der Steuerschieber 14 weiter in Richtung auf die Gehäusestirnseite 4 gegenüber dem Druckteil 11 verschoben wird (Fig. 4). Dabei wird das Zugteil 12 durch die Steuerteile 70, 71 des Steuerschiebers 14 mitgenommen, da das Zugteil mit seinem Quersteg 63 weiterhin an der Unterseite 30 des Verbindungstückes 18 des Druckteiles 11 anliegt. Der Stift 43 des Steuerschiebers 14 wird hierbei innerhalb des parallel zum Verbindungsstück 17 des Druckteiles 11 liegenden Abschnitt der Kulissenführung 42 im Sperrschieber 15 verschoben.

Der Steuerschieber 14 kann so weit verschoben werden, bis der Hakenkörper 53 des Zugteils 12 und der Haken 76 des Zugteiles 13 auf gleicher Höhe liegen (Fig. 4b und 4c). In dieser Lage liegen die beiden Zugteile 12, 13 noch aneinander. Der Quersteg 63 des Zugteiles 12 hat nunmehr eine Lage erreicht (Fig. 4b), in der er einer Vertiefung 96 im Verbindungsstück 18 des Druckteiles 11 gegenüberliegt.

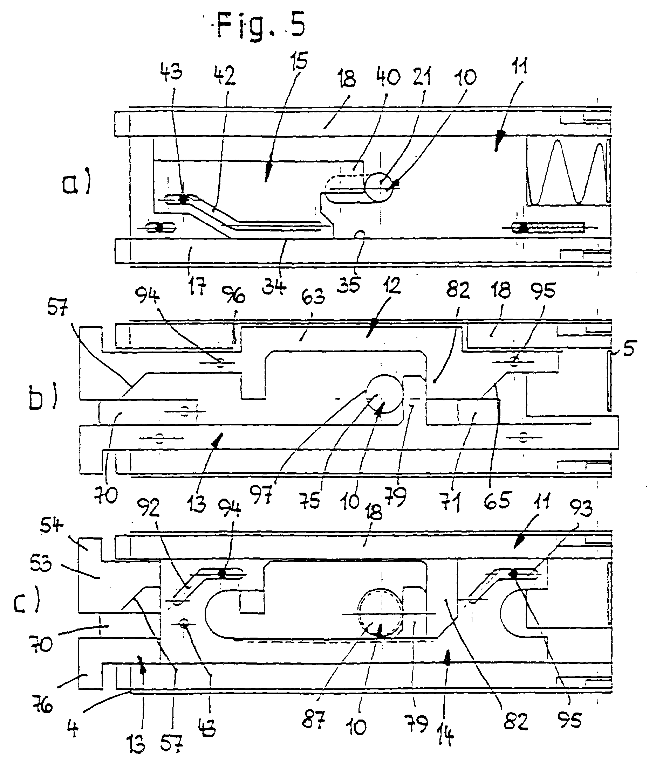

Wird nunmehr das Betätigungsteil 10 weiter im Uhrzeigersinn gedreht, wird der Steuerschieber 14 über das Zahnrad 87 weiter in Richtung auf die Gehäusestirnseite 4 gegenüber dem Druckteil 11 verschoben. Die Mitnehmer 94, 95 des Zugteils 12 werden nunmehr in den Kulissenführungen 92, 93 des Steuerschiebers 14 in deren schrägem Führungsabschnitt aufwärts verschoben, wodurch das Zugteil 12 in Richtung auf das Verbindungsstück 18 des Druckteiles 11 verschoben wird. Der Quersteg 63 des Zugteiles 12 kann in die Vertiefung 96 des Verbindungsstückes 18 eingreifen (Fig. 5b). Sobald die Stifte 94, 95 des Zugteiles 12 in den parallel zum Verbindungsstück 18 liegenden Teil der Kulissenführungen 92, 93 gelangen, ist die Endlage des Zugteiles 12 erreicht (Fig. 5b und 5c). Der Steuerschieber 14 wird vorteilhaft noch so weit relativ zu den Zugteilen 12, 13 und dem Druckteil 11 bewegt, daß die Stifte 94, 95 im parallel zum Verbindungsstück 18 des Druckteiles 11 liegenden Bereich der Kulissenführungen 92, 93 liegen. Dadurch ist ausgeschlossen, daß die Stifte 94, 95 unbeabsichtigt in die schrägen Abschnitte der Kulissenführungen gelangen.

Die Hubbewegung des Zugteiles 12 wird dadurch unterstützt, daß die Steuerteile 70, 71 des Steuerschiebers 14 auf die Schrägflächen 57 und 65 des Zugteiles 12 gelangen, wodurch es gegenüber dem Zugteil 13 angehoben wird. Der Steuerschieber 14 wird so weit verschoben, bis die Steuerteile 70, 71 zwischen die beiden Zugteile 12, 13 gelangen (Fig. 5b und 5c). Dadurch wird zuverlässig verhindert, daß die Haken 54, 76 der Zugteile 12, 13 unbeabsichtigt in Richtung zueinander bewegt werden. Die Verbindungseinrichtung ist dadurch zuverlässig an der Stütze 1, 2 gehalten.

In der Lage gemäß den Fig. 4 und 5 liegt der Mitnehmer 79 des Zugteils 13 an der Innenseite des Schenkels 82 des Zugteils 12 an.

Beim Verschieben des Steuerschiebers 14 wird nicht nur das Zugteil 12 in der beschriebenen Weise gegenüber dem Zugteil 13 verschoben, sondern auch der Sperrschieber 15 relativ zum Druckteil 11. Da der Steuerschieber 14 mit dem Stift 43 in die Kulissenführung 42 des Sperrschiebers 15 eingreift, wird eine zwangläufige Verschiebung des Sperrschiebers erreicht. Beim Verschieben des Steuerschiebers 14 aus der Stellung gemäß Fig. 4 in die Stellung gemäß Fig. 5 gelangt der Stift 43 in den schrägen Abschnitt der Kulissenführung 42, wcdurch der Sperrschieber 15 in Richtung auf das Verbindungsstück 17 des Druckteils 11 verschoben wird.

In der Endstellung liegt der Sperrschieber 15 mit seiner Anlagefläche 34 auf der Oberseite 35 des Verbindungsstückes 17 auf (Fig. 5a). Der Stift 43 liegt in dieser Lage in dem parallel zum Verbindungsstück 17 liegenden Endabschnitt der Kulissenführung 42, so daß verhindert wird, daß der Sperrschieber 15 unbeabsichtigt wieder zurückgeschoben werden kann. In der in Fig. 5a dargestellten Sperrstellung liegt die Sperrnase 40 des Sperrschiebers 15 vor dem Lagerteil 21 des Betätigungsteils 10. Dadurch wird verhindert, daß das Druckteil 11 aus der Stellung gemäß Fig. 5 in Richtung auf die Ausgangsstellung (Fig. 2) verschoben wird.

Der Mitnehmer 79 des Zugteils 13 liegt in der Stellung gemäß Fig. 5b am Exzenterteil 75 des Betätigungsteils 10 an. Der Exzenterteil 75 ist so ausgebildet, daß beim Weiterdrehen des Betätigungsteiles 10 im Uhrzeigersinn nunmehr eine Exzenterfläche 97 wirksam wird. Sie ist im Uhrzeigersinn ansteigend ausgebildet. Wird darum das Betätigungsteil 10 weiter im Uhrzeigersinn gedreht, wird über den Mitnehmer 79 das Zugteil 13 und, da der Mitnehmer am Schenkel 82 des Zugteil 12 anliegt, auch das Zugteil 12 wieder geringfügig in das Gehäuse 4 geschoben. Die beiden Haken 54, 76 der Zugteile 12, 13 werden dadurch in Richtung auf die über die Gehäusestirnseite 4 ragenden Teile 98, 99 des Druckteiles 11 verschoben. Wie sich beispielsweise aus Fig. 9 ergibt, werden auf diese Weise die Zugteile 12, 13 mit ihren Haken 54, 76 fest gegen die Stütze 1 gezogen, so daß die Stütze 1 zwischen den Haken 54, 76 und den vorstehenden Teilen 98 und 99 des Druckteiles 11 verspannt wird. Der Grad der Verspannung wird durch die Steigung der Exzenterfläche 97 des Exzenterteiles 75 bestimmt.

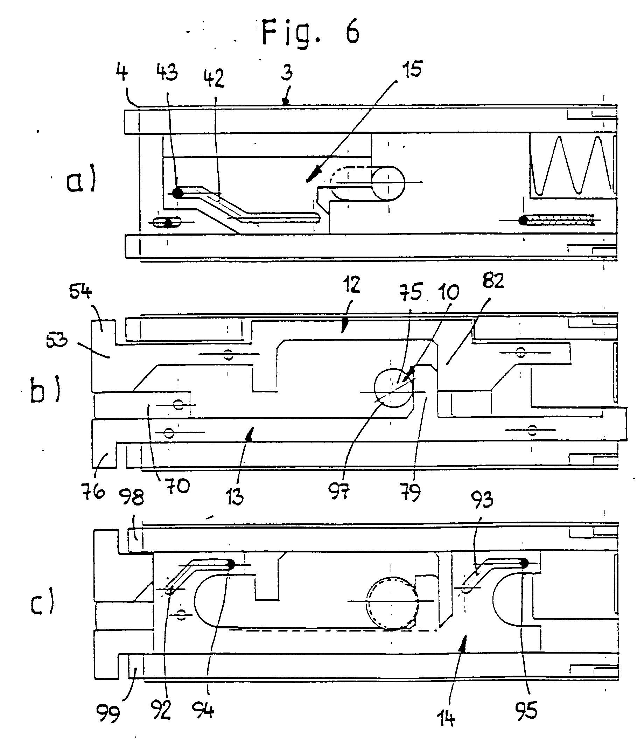

Die Stütze 1 wird, da sie von beiden Seiten durch die Haken 54, 76 sowie die Druckteilabschnitte 98, 99 kraftbeaufschlagt wird, nicht übermäßig beansprucht. Auf diese Weise wird zuverlässig ein Ausreißen der Stütze 1 im Bereich der Durchstecköffnung 100 (Fig. 9) vermieden. Die Höhe bzw. Breite der Durchstecköffnung 100 ist so gewählt, daß die Zugteile 12, 13 in der Arretierstellung (Fig. 6 und 9) am Rand der Durchstecköffnung anliegen. Der zwischen den Zugteilen 12, 13 in der Arretierstellung liegende Steuerteil 70 sichert die Haken 54, 76 in der Verriegelungsstellung. Es ist dadurch ausgeschlossen, daß auch unter großen Belastungen die Verbindungseinrichtung von der Stütze 1 ungewollt gelöst wird. Wie Fig. 6a zeigt, wird der Stift 43 des Steuerschiebers 14 beim Verschieben in die Arretierstellung bis zum Ende der Kulissenführung 42 des Sperrschiebers 15 verschoben. Da beim beschriebenen Spannvorgang die Zugteile 12, 13 wieder geringfügig in das Gehäuse 3 zurückgeschoben werden, haben die Stifte 94, 95 des Zugteiles 12 vor dem Spannvorgang (Fig. 5c) noch Abstand von dem der Gehäusestirnseite 5 zugewandten Ende der Kulissenführungen 92, 93. Nach dem Spannvorgang (Fig. 6c) liegen die Stifte 94, 95 des Zugteils 12 an den Enden dieser Kulissenführungen 92, 93 an.

Die Verbindungseinrichtung läßt sich sehr einfach an die jeweilige Stütze 1, 2 anschließen. Wenn die beiden Zugteile 12, 13 aus dem Gehäuse 3 geschoben worden sind und die Zugteile noch aneinanderliegen (Fig. 4), lassen sich die Haken 54, 76 der Zugteile 12, 13 einfach durch die Durchstecköffnung 100 stecken. Der Abstand der Haken 54, 76 von den vorstehenden Druckteilabschnitten 98, 99 ist in dieser Lage zudem noch größer als die Dicke der Stütze 1, 2. Wird darum das Zugteil 12 in der beschriebenen Weise vom Zugteil 13 wegbewegt (Fig. 5), kann der Haken 54 des Zugteiles 12 mühelos hinter den zugehörigen Rand der Durchstecköffnung 100 der Stütze 1, 2 bewegt werden. Erst wenn die beiden Haken 54, 76 der Zugteile 12, 13 durch den Steuerteil 70 des Steuerschiebers 14 voneinander getrennt sind, erfolgt der beschriebene Spannvorgang, bei dem die Haken 54, 76 in Richtung auf die Druckteilabschnitte 98, 99 verschoben werden, wodurch der Rand der Durchstecköffnung 100 zwischen diesen Teilen verspannt wird.

Die Verbindungseinrichtung läßt sich auch sehr einfach von der Stütze 1 bzw. 2 abnehmen. Hierzu wird lediglich das Betätigungsteil 10 entgegen dem Uhrzeigersinn gedreht, wodurch der Steuerschieber 14 über den Zahnradeingriff in umgekehrter Richtung gegenüber dem Gehäuse 3 verschoben wird. Der Sperrschieber 15 und das Zugteil 12 werden über die Kulissenführungen 42, 92, 93 zwangläufig in Richtung auf ihre Ausgangslage zurückgeschoben. Über den Stift 52 des Zugteils 13 wird auch das Druckteil 11 in seine in Fig. 2 dargestellte Ausgangslage zurückgeschoben.

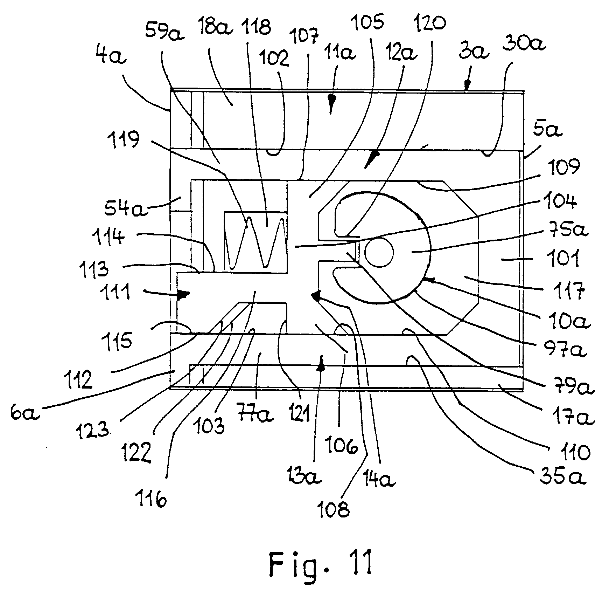

Die Fig. 11 bis 14 zeigen eine weitere Ausführungsform einer Verbindungseinrichtung, bei der die Zugteile ebenfalls in Richtung auf das Druckteil verspannt werden. Die Verbindungseinrichtung hat das Gehäuse 3a mit den Seitenwänden 6a bis 9a. Ebenso wie beim vorigen Ausführungsbeispiel ist das Gehäuse 3a verhältnismäßig flach ausgebildet und hat offene Stirnseiten 4a, 5a.

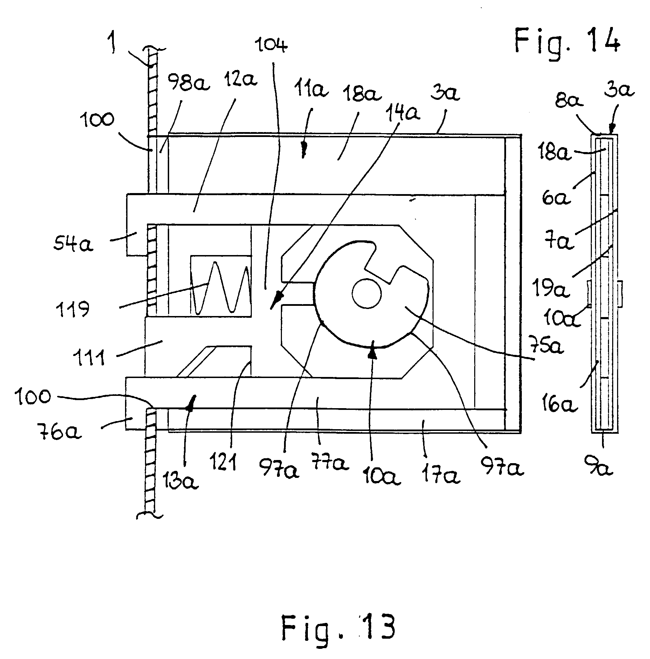

Im Gehäuse 3a ist das Druckteil 11a verschiebbar gelagert. Es hat die beiden mit Abstand voneinander liegenden Gleitteile 16a und 19a, die an den Innenseiten der Seitenwände 6a und 7a anliegen. Die beiden Gleitteile 16a, 19a sind an ihren Längsrändern durch die Verbindungsstücke 17a und 18a miteinander verbunden. Vorteilhaft sind die Gleitteile 16a, 19a und die Verbindungsstücke 17a, 18a einstückig miteinander ausgebildet. Entsprechend dem vorigen Ausführungsbeispiel ist das Druckteil 11a vorteilhaft aus Kunststoff gefertigt. Die Verbindungsstücke 17a, 18a liegen an der Innenseite der schmalen Seitenwände 8a und 9a des Gehäuses 3a an. An der Unterseite 30a des Verbindungsstückes 18a und an der Oberseite 35a des Verbindungsstückes 17a liegen die Zugteile 12a und 13a an. Im Unterschied zum vorigen Ausführungsbeispiel sind die Zugteile 12a, 13a einstückig miteinander ausgebildet. Wie Fig. 14 zeigt, liegen die Zugteile 12a, 13a an den einander zugewandten Seiten der Gleitteile 16a und 19a des Druckteiles 11a an.

Das Zugteil 12a hat einen Steg 59a, der am freien Ende den Haken 54a aufweist, der in Richtung auf das Verbindungsstück 13a gerichtet ist. Der Haken 54a steht wie beim vorigen Ausführungsbeispiel senkrecht vom Steg 59a ab.

Das Zugteil 13a hat ebenfalls den Steg 77a, der am freien Ende den in gleiche Richtung wie der Haken 54a weisenden Haken 76a aufweist.

Die beiden Stege 59a, 77a der Zugteile 12a, 13a sind durch einen Quersteg 101 miteinander verbunden, der senkrecht zu den Stegen 59a, 77a verläuft. Die Zugteile 12a, 13a liegen mit den voneinander abgewandten Außenseiten ihrer Stege 59a, 77a an der Unterseite 30a bzw. an der Oberseite 35a der Verbindungsstücke 17a, 18a des Druckteiles 11a an.

Die Stege 59a, 77a der Zugteile 12a, 13a durchsetzen Öffnungen 102, 103 im Druckteil 11a. In der Ausgangslage gemäß Fig. 11 liegen die Haken 54a, 76a der Zugteile 12a, 13a versenkt im Gehäuse 3a. Auch das Druckteil 11a liegt vollständig innerhalb des Gehäuses 3a.

Die parallel zueinander verlaufenden Seitenwände 6a, 7a des Gehäuses 3a werden vom Betätigungsteil 10a durchsetzt (Fig. 14), das mit (nicht dargestellten) Lagerteilen drehbar in den Seitenwänden gelagert ist. Die Gleitteile 16a, 19a des Druckteiles 11a haben entsprechend der vorigen Ausführungsform (nicht dargestellte) Langlöcher, durch welche das Betätigungsteil 10a ragt.

Im Bereich zwischen den Stegen 59a, 77a ist der Steuerschieber 14a verschiebbar angeordnet. Er hat einen senkrecht zur Verschieberichtung der Zugteile 12a, 13a liegenden Steg 104, der an seinen Enden jeweils mit einer Verbreiterung 105, 106 versehen ist. Diese verbreiterten Enden haben ebene Stirnseiten 107, 108, mit denen der Steuerschieber 14a an den einander zugewandten Innenseiten 109, 110 der Stege 59a, 77a anliegt.

Vom Steg 104 des Steuerschiebers 14a steht der Mitnehmer 79a senkrecht in Richtung auf die Gehäusestirnseite 5a ab. Er hat entsprechend der vorigen Ausführungsform rechteckigen Umriß.

Mit dem Steuerschieber 14a ist ein Sperrelement 111 verbunden, vorzugsweise einstückig mit ihm ausgebildet. Das Sperrelement 111 liegt mit einer ebenen Anlagefläche 112 auf der Innenseite 110 des Steges 77a des Zugteiles 13a im Bereich des Hakens 76a an. Um auch größere Belastungen sicher aufnehmen zu können, verbreitert sich das Sperrelement 111 von seiner Anlagefläche 112 aus. Auf der gegenüberliegenden Seite liegt das Sperrelement 111 mit einer weiteren ebenen Anlagefläche 113 am Rand 114 einer Durchtrittsöffnung 115 des Druckteiles 11a an. Das Sperrelement 111 ist über einen Steg 116 mit dem Steuerschieber 14a verbunden. Der Steg 116 liegt parallel zum Steg 77a des Zugteils 13a.

Wie Fig. 11 zeigt, ist der Steuerschieber 14a in einer Ausnehmung 117 des Druckteiles 11a untergebracht. In der Ausgangsstellung gemäß Fig. 11 liegen die Haken 54a, 76a bündig mit der Gehäusestirnseite 4a. Das Sperrelement 111 ist gegenüber der Gehäusestirnseite 4a geringfügig zurückgesetzt.

Das Druckteil 11a hat eine Ausnehmung 118, in der eine Druckfeder 119 untergebracht ist. Sie stützt sich mit einem Ende am Druckteil 11a und mit dem anderen Ende am Steg 104 des Steuerschiebers 14a ab.

Das Betätigungsteil 10a ist in dem Bereich der Ausnehmung 117 mit dem Exzenterteil 75a versehen, der die Exzenterfläche 97a aufweist. Der Exzenterteil 75a hat eine umfangsseitige Vertiefung 120, in die der Mitnehmer 79a des Steuerschiebers 14a in der Ausgangsstellung eingreift. Der Steg 104 des Steuerschiebers 14a liegt in der Ausgangslage gemäß Fig. 11 am Boden 121 der Ausnehmung 117 im Druckteil 11a an.

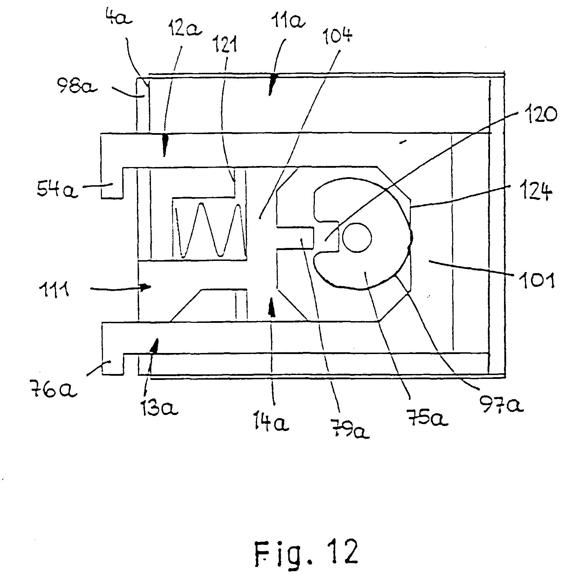

Um die Verbindungseinrichtung in die Stütze 1 (Fig. 13) einhängen zu können, werden das Druckteil 11a und die Zugteile 12a, 13a durch die Gehäusestirnseite 5a aus im Gehäuse 3a manuell oder durch Federkraft verschoben. Die Verschiebebewegung des Druckteils 11a wird dadurch begrenzt, daß die Lagerteile des Betätigungsteils 10a an den Enden der Langlöcher anschlagen. In dieser Lage ragt das Druckteil 11a mit den Abschnitten 98a über die Gehäusestirnseite 4a (Fig. 12). Über den Quersteg 101 lassen sich die Zugteile 12a, 13a gegenüber dem Druckteil 11a so weit verschieben, daß die Haken 54a, 76a den Druckteilabschnitten 98a mit Abstand gegenüberliegen. Dieser Abstand ist wie beim vorigen Ausführungsbeispiel großer als die Dicke der Stütze 1 im Bereich der Durchstecköffnungen 100.

Beim Verschieben des Druckteiles 11a gelangt eine Schrägfläche 122 (Fig. 11) des Druckteiles zur Anlage an einer entsprechenden Schrägfläche 123, die am Sperrelement 111 vorgesehen ist. Dadurch wird auch das Sperrelement 111 und damit der Steuerschieber 14a mitgenommen (Fig. 12). Da in der Ausgangslage (Fig. 11) die beiden Schrägflächen 122, 123 Abstand voneinander haben und der Steuerschieber 14a mit seinem Steg 104 in der beschriebenen Weise am Boden 121 der Ausnehmung 117 des Druckteiles 11a anliegt, hat der Steg 104 des Steuerschiebers 14a in der verschobenen Lage Abstand vom Boden 121 (Fig. 12). Dieser Abstand zwischen dem Steg 104 und dem Boden 121 des Druckteiles 11a ist für den nachfolgenden Spannvorgang wesentlich. Der Steuerschieber 14a wird so weit verschoben, daß sein Mitnehmer 79a außerhalb der Vertiefung 120 des Exzenterteils 75a liegt (Fig. 12).

Da der Abstand zwischen den Haken 54a, 76a und den Druckteilabschnitten 98a größer ist als die Dicke des Randes im Bereich der Durchstecköffnungen 100 der Stütze 1, läßt sich die Verbindungseinrichtung leicht einhängen. Anschließend wird das Betätigungsteil 10a im Uhrzeigersinn gedreht, wobei die Exzenterfläche 97a gegen die Innenseite 124 des Quersteges 101 sowie gegen den Mitnehmer 79a drückt. Dadurch werden die Zugteile 12a und 13a in das Gehäuse 3a geringfügig zurückgeschoben, während der Steuerschieber 14a und damit das Sperrelement 111 so weit aus dem Gehäuse geschoben werden, bis der Steg 104 des Steuerschiebers 14a am Boden 121 des Druckteiles 11a anliegt (Fig. 13). Der Steuerschieber 14a wird hierbei gegen die Kraft der Druckfeder 119 verschoben, wobei die Federkraft vom Druckteil 11a aufgenommen wird, das an den Lagerteilen des Betätigungsteiles 10a abgestützt ist. Auf diese Weise wird der Rand der Durchstecköffnungen 100 der Stütze 1 zwischen den Haken 54a, 76a der Zugteile 12a, 13a und den Druckteilabschnitten 98a verspannt. Die Abmessungen des Sperrelementes 111 sind so gewählt, daß in der Sperrstellung gemäß Fig. 13 das Sperrelement 111 in die Durchstecköffnung 100 der Stütze 1 ragt. Zusammen mit dem Steg 77a des Zugteils 13a ist dadurch die Verbindungseinrichtung in dieser Durchstecköffnung 100 gegen Verschieben einwandfrei gesichert.

Soll die Verbindungseinrichtung abgenommen werden, wird das Betätigungsteil 10a aus der Stellung gemäß Fig. 13 entgegen dem Uhrzeigersinn gedreht. Sobald der Mitnehmer 79a von der Exzenterfläche 97a des Exzenterteils 75a freikommt, drückt die Druckfeder 119 den Steuerschieber 14a und damit das Sperrelement 111 wieder in das Gehäuse 3a zurück. Nimmt der Exzenterteil 75a die Lage gemäß den Fig. 11 und 12 ein, kann der Mitnehmer 79a in die Vertiefung 120 des Exzenterteils 75a eingreifen. Durch das Zurückdrehen des Exzenterteils 75a wird außerdem die Verspannung der Stütze 1 zwischen den Haken 54a, 76a und den Druckteilabschnitten 98a aufgehoben, so daß die Verbindungseinrichtung leicht abgenommen werden kann.

In der zurückgezogenen Stellung (Fig. 11) liegt der Haken 54a des Zugteils 12a innerhalb des Gehäuses 3a an der Stirnseite des Druckteilabschnittes 98a an, so daß ein Herausfallen der Zugteile 12a, 13a aus dem Gehäuse 3a ausgeschlossen ist.

## Patentansprüche

1. Verbindungseinrichtung mit einem verschiebbar gelagerten Zugteil (12, 13; 12a, 13a), das mit einem Betätigungsteil (10, 10a) aus einer Ausgangs- in eine Klemmlage verstellbar ist und einen Haken (54, 76; 54a, 76a) aufweist, der einen Rand einer Durchstecköffnung (100) in einem Befestigungsteil (1, 2) hintergreift und in der Klemmlage auf diesen Rand eine gegen mindestens ein Druckteil (11, lla) gerichtete Kraft ausübt, das in der Klemmlage mit wenigstens einem Abschnitt (98, 99; 98a) am Befestigungsteil (1, 2) anliegt und gegen welches das Zugteil (12, 13; 12a, 13a) unter Zwischenlage des Befestigungsteiles (1, 2) verspannbar ist, wobei der Haken (54, 76; 54a, 76a) gegen Verschieben relativ zur Durchstecköffnung (100) des Befestigungsteiles (1, 2) gesichert ist,
dadurch gekennzeichnet, daß das Druckteil (11, 11a) und das Zugteil (12, 13; 12a, 13a) in einem Gehäuse (3, 3a) gelagert sind, und daß das Druckteil (11, 11a) über einen im Gehäuse (3, 3a) untergebrachten Steuerschieber (14, 14c) verschiebbar gelagert ist, der durch das Betätigungsteil (10, 10a) zwangläufig verschiebbar ist.

2. Einrichtung nach Anspruch 1,
dadurch gekennzeichnet, daß der Steuerschieber (14) eine Verzahnung (86) aufweist, in die ein Zahnrad (87) des Bestätigungsteiles (10) eingreift.

3. Einrichtung nach Anspruch 1 oder 2,
dadurch gekennzeichnet, daß das Betätigungsteil (10, 10a) drehbar in Seitenwänden (6, 7; 6a, 7a) des Gehäuses (3, 3a) gelagert ist und vorzugsweise das Druckteil (11, lla) durchsetzt, das vorzugsweise mindestens ein Langloch (20) für den Durchtritt des Betätigungsteiles (10, 10a) aufweist.

4. Einrichtung nach einem der Ansprüche 1 bis 3,
dadurch gekennzeichnet, daß durch den Steuerschieber (14, 14a) ein Sperrteil (70, 71; 111) betätigbar ist, das im Zusammenwirken mit dem Zugteil (12, 13; 13a) ein Aushängen des Hakens (54, 76; 54a, 76a) verhindert und vorzugsweise fest mit dem Steuerschieber (14, 14a) verbunden, vorzugsweise einstückig mit ihm ausgebildet ist.

5. Einrichtung nach einem der Ansprüche 1 bis 4,
dadurch gekennzeichnet, daß sie ein weiteres Zugteil (12 bzw. 13; 12a bzw. 13a) aufweist, das mit einem Haken (54 bzw. 76; 54a bzw. 76a) versehen ist.

6. Einrichtung nach Anspruch 5,
dadurch gekennzeichnet, daß die beiden Zugteile (12, 13) relativ zueinander verschiebbar sind.

7. Einrichtung nach Anspruch 5 oder 6,
dadurch gekennzeichnet, daß das eine Zugteil (12) durch das Sperrteil (70, 71) in die Arretierlage verstellbar ist und vorzugsweise eine schräg zur Verschieberichtung des Sperrteiles (70, 71) liegende Steuerfläche (57) hat, über die das Zugteil (12) vom Sperrteil (70, 71) in seine Arretierlage relativ zum anderen Zugteil (13) verstellbar ist.

8. Einrichtung nach Anspruch 6 oder 7,
dadurch gekennzeichnet, daß das weitere Zugteil (12) durch den Steuerschieber (14) gesteuert verschiebbar ist und vorzugsweise mit zwei Stiften (94, 95) in Kulissenführungen (92, 93) des Steuerschiebers (14) eingreift.

9. Einrichtung nach einem der Ansprüche 1 bis 8,
dadurch gekennzeichnet, daß das Druckteil (11, 11a) in seiner verschobenen Lage durch wenigstens ein Sicherungsteil (15; 79a, 104) gegen Verschieben gesichert ist.

10. Einrichtung nach Anspruch 9,
dadurch gekennzeichnet, daß das Sicherungsteil (15) ein Sperrschieber ist, der durch den Steuerschieber (14) gesteuert in seine Sicherungslage verstellbar ist, der vorzugsweise mindestens einen Stift (43) aufweist, der in eine Kulissenführung (42) des Sperrschiebers (15) eingreift, und daß der Sperrschieber (15) vorzugsweise eine Sperrnase (40) aufweist, die in Sicherungslage am Betätigungsteil (10) anliegt.

11. Einrichtung nach Anspruch 10,
dadurch gekennzeichnet, daß der Sperrschieber (15) in Verschieberichtung des Druckteiles (11) unverschieblich in einer Vertiefung (22) des Druckteiles (11) gelagert ist und vorzugsweise senkrecht zur Verschieberichtung des Druckteiles (11) verschiebbar ist.

12. Einrichtung nach Anspruch 9,
dadurch gekennzeichnet, daß das Sicherungsteil (79a, 104) am Steuerschieber (14a) vorgesehen, vorzugsweise einstückig mit ihm ausgebildet ist und vorzugsweise zwischen einem Anschlag (121) des Druckteiles (11a) und dem Betätigungsteil (10a) in der Sicherungsstellung gehalten ist.

13. Einrichtung nach Anspruch 5,
dadurch gekennzeichnet, daß die beiden mit Abstand voneinander liegenden Zugteile (12a, 13a) einstükkig ausgebildet und vorzugsweise durch einen Quersteg (101) miteinander verbunden sind, an dem vorzugsweise der Exzenterteil (75a) des Betätigungsteiles (10a) zum Verstellen der Zugteile (12a, 13a) in die Klemmstellung angreift.

14. Einrichtung nach einem der Ansprüche 5 bis 13,
dadurch gekennzeichnet, daß das eine Zugteil (13) einen Mitnehmer (79) zum Verstellen beider Zugteile (12, 13) in die Klemmstellung aufweist, und daß vorzugsweise das andere Zugteil (12) am Mitnehmer (79) des einen Zugteiles (13) anliegt, der vorzugsweise durch einen Exzenterteil (75) des Betätigungsteiles (10) verstellbar ist.

15. Einrichtung nach einem der Ansprüche 1 bis 14,
dadurch gekennzeichnet, daß das Druckteil (11, 11a) gegen Federkraft in die Klemmstellung verschiebbar ist.

## Claims

1. A connecting device with a displaceably mounted traction part (12, 13; 12a, 13a) movable from a starting position to a clamping position by an actuating part (10, 10a) and comprising a hook (54, 76; 54a, 76a), which engages behind an edge of a through opening (100) in a fastening part (1, 2) and in the clamping position exerts upon the said edge a force directed against at least one thrust part (11, 11a), which rests with at least one portion (98, 99; 98a) upon the fastening part (1, 2) in the clamping position and against which the traction part (12, 13; 12a, 13a) can be clamped with the interposition of the fastening part (1, 2), wherein the hook (54, 76; 54a, 76a) is prevented from being displaced relative to the through opening (100) of the fastening part (1, 2),
**characterized in that** the thrust part (11, 11a) and the traction part (12, 13; 12a, 13a) are mounted in a housing (3, 3a), and the thrust part (11, 1 la) is mounted so as to be displaceable by way of a control slide (14, 14c) arranged in the housing (3, 3a) and forcibly displaceable by the actuating part (10, 10a).

2. A device according to Claim 1, **characterized in that** the control slide (14) has a set of teeth (86) into which a gearwheel (87) of the actuating part (10) engages.

3. A device according to Claim 1 or 2, **characterized in that** the actuating part (10, 10a) is mounted rotatably in lateral walls (6, 7; 6a, 7a) of the housing (3, 3a) and preferably passes through the thrust part (11, 11a) which preferably comprises at least one elongate hole (20) for the passage of the actuating part (10, 10a).

4. A device according to one of Claims 1 to 3, **characterized in that** a locking part (70, 71; 111) is actuable by the control slide (14, 14a), and the locking part (70, 71; 111) prevents - in conjunction with the traction part (12, 13; 13a) - the hook (54, 76; 54a, 76a) from hanging out and is preferably rigidly connected to the control slide (14, 14a), and is preferably formed integrally therewith.

5. A device according to one of Claims 1 to 4, **characterized in that** it comprises a further traction part (12 or 13 respectively; 12a or 13a respectively) which is provided with a hook (54 or 76 respectively; 54a or 76a respectively).

6. A device according to Claim 5, **characterized in that** the two traction parts (12, 13) are displaceable relative to each other.

7. A device according to Claim 5 or 6, **characterized in that** one traction part (12) is movable into the locking position by the locking part (70, 71) and preferably comprises a control face (57) which is situated obliquely to the displacement direction of the locking part (70, 71) and by way of which the traction part (12) is movable by the locking part (70, 71) into its locking position relative to the other traction part (13).

8. A device according to Claim 6 or 7, **characterized in that** the further traction part (12) is displaceable in a manner controlled by the control slide (14) and preferably engages with two pins (94, 95) in slotted guides (92, 93) of the control slide (14).

9. A device according to one of Claims 1 to 8, **characterized in that** the thrust part (11, 11a) in its displaced position is prevented from being displaced by at least one securing part (15; 79a, 104).

10. A device according to Claim 9, **characterized in that** the securing part (15) is a locking slide which is displaceable into its secured position in a manner controlled by the control slide (14) which preferably comprises at least one pin (43) engaging in a slotted guide (42) of the locking slide (15), and the locking slide (15) preferably comprises a locking projection (40) which rests on the actuating part (10) in the secured position.

11. A device according to Claim 10, **characterized in that** the locking slide (15) is mounted in a depression (22) in the thrust part (11) so as to be non-displaceable in the displacement direction of the thrust part (11) and is preferably displaceable at right angles to the displacement direction of the thrust part (11).

12. A device according to Claim 9, **characterized in that** the securing part (79a, 104) is provided on the control slide (14a), is preferably formed integrally therewith and is preferably held in the secured position between a stop (121) of the thrust part (11a) and the actuating part (10a).

13. A device according to Claim 5, **characterized in that** the two traction parts (12a, 13a) situated at a distance from each other are constructed in one piece and are preferably joined together by a transverse web (101) on which the eccentric (75a) of the actuating part (10a) for moving the traction parts (12a, 13a) into the clamping position preferably engages.

14. A device according to one of Claims 5 to 13, **characterized in that** one traction part (13) comprises an entrainment member (79) for moving the two traction parts (12, 13) into the clamping position, and the other traction part (12) preferably rests on the entrainment member (79) of one traction part (13) which is preferably movable by an eccentric (75) of the actuating part (10).

15. A device according to one of Claims 1 to 14, **characterized in that** the thrust part (11, 11a) is displaceable into the clamping position against spring force.

## Revendications

1. Dispositif de raccordement comportant un tirant (12, 13; 12a, 13a) qui est porté avec liberté de coulissement et qu'une pièce de manoeuvre (10a, 10a) peut déplacer pour le faire passer d'une position initiale en une position de serrage et qui présente une crochet (54, 76; 54a, 76a) qui saisit par derrière un bord d'une ouverture d'enfichage (100) prévue dans une pièce de fixation (1, 2) et qui, dans la position de serrage, exerce sur ce bord une force dirigée en direction d'au moins une pièce de poussée (11, 11a) qui, en position de serrage, s'appuie, par au moins un tronçon (98, 99; 98a), contre la pièce de fixation (1, 2) et contre laquelle le tirant (12, 13; 12a, 13a) peut être serré, avec interposition de la pièce de fixation (1, 2), le crochet (54, 76; 54a, 76a) étant assuré à l'égard d'un coulissement par rapport à l'ouverture d'enfichage (100) de la pièce de fixation (1, 2),
caractérisé par le fait que la pièce de poussée (11a, 11a) et le tirant (12, 13; 12a, 13a) sont portés dans un boîtier (3, 3a) et que la pièce de poussée (11, 11a) est portée avec possibilité de coulissement par l'intermédiaire d'un coulisseau de commande (14, 14c) qui est logé dans le boîtier (3, 3a) et que la pièce de manoeuvre (10, 10a) peut faire obligatoirement coulisser.

2. Dispositif selon la revendication 1,
caractérisé par le fait que le coulisseau de commande (14) présente une denture (86) dans laquelle engrène une roue dentée (87) de la pièce de manoeuvre (10).

3. Dispositif selon la revendication 1 ou 2,
caractérisé par le fait que la pièce de manoeuvre (10, 10a) est portée, avec liberté de rotation, dans les parois latérales (6, 7; 6a, 7a) du boîtier (3, 3a) et traverse de préférence la pièce de poussée (11, 11a) qui présente de préférence au moins une lumière (20) pour le passage de la pièce de manoeuvre (10a, 10a).

4. Dispositif selon l'une des revendications 1 à 3,
caractérisé par le fait que le coulisseau de commande (14, 14a) peut manoeuvrer une pièce de verrouillage (70, 71; 111) qui, en collaboration avec le tirant (12, 13 ; 13a) interdit un décrochage du crochet (54, 76; 54a, 76a) et qui est de préférence rigidement relié au coulisseau de commande (14, 14a), de préférence conçu d'une seule pièce avec lui.

5. Dispositif selon l'une des revendications 1 à 4,
caractérisé par le fait qu'il présente un autre tirant (12 ou 13; 12a ou 13a) qui est muni d'un crochet (54 ou 76: 54a ou 76a).

6. Dispositif selon la revendication 5,
caractérisé par le fait que les deux tirants (12, 13) peuvent coulisser l'un par rapport à l'autre.

7. Dispositif selon la revendication 5 ou 6,
caractérisé par le fait que le premier tirant (12) peut être amené dans la position de blocage par la pièce de verrouillage (70, 71) et comporte de préférence une surface de commande (57) qui est située obliquement par rapport à la direction de coulissement de la pièce de verrouillage (70. 71) et par l'intermédiaire de laquelle le tirant (12) peut être déplacé par la pièce de verrouillage (70, 71), par rapport à l'autre tirant (13). pour venir dans sa position de blocage.

8. Dispositif selon la revendication 6 ou 7,
caractérisé par le fait que l'autre tirant (12) peut être entraîné en coulissement, commandé par le coulisseau de commande (14) et que de préférence il vient en prise, par deux tétons (94, 95), dans des guidages à coulisse (92, 93) du coulisseau de commande (14).

9. Dispositif selon l'une des revendications 1 à 8.
caractérisé par le fait que. dans la position où elle a coulissé, la pièce de poussée (11, 11a) est assurée à l'égard d'un coulissement par au moins une pièce de sécurité (15: 79a, 104) .

10. Dispositif selon la revendication 9.
caractérisé par le fait que la pièce de sécurité (15) est un coulisseau de verrouillage qui, commandé par le coulisseau de commande (14), peut se déplacer pour venir dans sa position de sécurité, qui de préférence présente au moins un téton (43) qui vient en prise dans un guidage à coulisse (42) du coulisseau de verrouillage (15) et par le fait que le coulisseau de verrouillage (15) présente de préférence un talon de verrouillage (40) qui, en position de sécurité. s'appuie contre la pièce de manoeuvre (10).

11. Dispositif selon la revendication 10,
caractérisé par le fait que le coulisseau de verrouillage (15) est porté dans un évidement (22) de la pièce de poussée (11) sans possibilité de coulisser dans la direction de coulissement de la pièce de poussée (11) et qu'il peut de préférence coulisser perpendiculairement à la direction de coulissement de la pièce de poussée (11).

12. Dispositif selon la revendication 9,
caractérisé par le fait que la pièce de sécurité (79a, 104) est prévue sur le coulisseau de commande (14a), que de préférence elle est conçue d'une seule pièce avec lui et que de préférence elle est maintenue dans la position de sécurité entre une butée (121) de la pièce de poussée (11a) et la pièce de manoeuvre (10a).

13. Dispositif selon la revendication 5,
caractérisé par le fait que les deux tirants (12a, 13a), situés à une certaine distance l'un de l'autre, sont conçus d'une seule pièce et que de préférence ils sont reliés l'un à l'autre par une traverse (101) sur laquelle agit de préférence l'excentrique (75a) de la pièce de manoeuvre (10a) pour amener les tirants (12a, 13a) dans la position de serrage.

14. Dispositif selon l'une des revendications 5 à 13,
caractérisé par le fait que le premier tirant (13a) présente un entraîneur (79) pour amener les deux tirants (12, 13) dans la position de serrage et que de préférence l'autre tirant (12) s'appuie contre l'entraîneur (79) du premier tirant (13), entraîneur qui de préférence peut être déplacé par un excentrique (75) de la pièce de manoeuvre (10).

15. Dispositif selon l'une des revendications 1 à 14, caractérisé par le fait que la pièce de poussée (11, 11a) peut coulisser à l'encontre de la force d'un ressort pour venir dans la position de serrage.
